# EUROPÄISCHE PATENTSCHRIFT

(11) **EP 0 671 999 B1**
(45) Veröffentlichungstag und Bekanntmachung des Hinweises auf die Patenterteilung: **21.08.1996**
(21) Anmeldenummer: 94902718.9
(22) Anmeldetag: 08.12.1993
(51) Int. Cl.: B60T 8/40, F04B 1/04, H02K 7/08, H02K 1/17, H02K 15/16, F16C 27/06

(54) **GERÄUSCHREDUZIERTES PUMPENAGGREGAT, INSBESONDERE FÜR GEREGELTE BREMSANLAGEN**
NOISE-REDUCED PUMPING SET, IN PARTICULAR FOR REGULATED BRAKE SYSTEMS
GROUPE MOTO-POMPE A NIVEAU DE BRUIT REDUIT, NOTAMMENT POUR SYSTEMES DE FREINAGE ASSERVIS

(30) Priorität: 11.12.1992 DE 4241827
(43) Veröffentlichungstag der Anmeldung: 20.09.1995
(73) Patentinhaber: ITT Automotive Europe GmbH, 60488 Frankfurt (DE)
(72) Erfinder: VOLZ, Peter, D-64291 Darmstadt (DE)
(74) Vertreter: Portwich, Peter
(86) Internationale Anmeldenummer: EP9303455
(87) Internationale Veröffentlichungsnummer: WO9413518

(56) Entgegenhaltungen:
- EP-A- 0 204 235
- EP-A- 0 220 581
- EP-A- 0 509 883
- DE-A- 2 810 121
- DE-A- 3 133 111
- FR-A- 2 641 509
- US-A- 4 568 131
- PATENT ABSTRACTS OF JAPAN vol. 7, no. 132 (E-180)(1277) 9. Juni 1983 & JP,A,58 046 845 (MEIDENSHA) 18. März 1983
- PATENT ABSTRACTS OF JAPAN vol. 7, no. 255 (E-210)(1400) 12. November 1983 & JP,A,58 141 659 (MITSUBISHI DENKI) 23. August 1983

## Beschreibung

Die Erfindung betrifft ein Aggregat aus Radialkolbenpumpe, insbesondere Hochdruckkolbenpumpe, und Antriebsmotor.
Derartige Pumpen werden u.a. in geregelten Bremsanlagen für Kraftfahrzeuge eingesetzt, um beispielsweise ein Blockieren oder Durchdrehen der Räder beim Bremsen bzw. Anfahren zu verhindern. Da die durch ein Bremsenregelsystem zu regelnden Leistungen in der Regel immer größer werden, andererseits die mit derartigen Regelsystemen ausgerüsteten Fahrzeuge in ihrer Geräuschbildung immer mehr reduziert werden, kann sich eine beim Bremsvorgang auftretende Geräuschentwicklung für die Bedienungsperson des Kraftfahrzeugs sehr unangenehm bemerkbar machen. Das gilt insbesondere beim Ansprechen der genannten Regelsysteme der Bremsen, da diese Systeme vergleichsweise selten bedient werden und so die damit verbundenen Geräusche von dem Fahrer falsch gedeutet werden könnten, was zu Fehlbedienungen Anlaß geben kann.

Insbesondere bei den in ABS- und ASR-Systemen eingesetzten Hochdruckpumpen, die von einem Elektromotor angetrieben werden, können sich die Pumpengeräusche der Hochdruckpumpe recht unangenehm bemerkbar machen.

Es hat Vorschläge gegeben, das Pumpengehäuse mit einer Isolierschicht zu versehen oder in einer anderen Form geräuschfest zu kapseln. Der hierfür notwendige Aufwand und Volumenbedarf ist aber erheblich.

Aus der DE-OS 38 08 901 ist es weiterhin bekannt, zur Dämpfung der Pumpengeräusche spezielle Dämpfungskammern vorzusehen. Eine weitere Beschreibung derartiger Radialkolbenpumpen geht aus der DE-OS 37 22 988 hervor.

Aus der DE-A-39 41 442 ist ein Aggregat aus Antriebsmotor und angetriebener Radialkolbenpumpe mit allen im Oberbegriff des Anspruchs 1 aufgeführten Merkmalen bekannt. Hierbei wird der Anker des Antriebsmotors auf der im Pumpengehäuse befestigten Antriebswelle montiert. Als nachteilig ist hieran anzusehen, daß die Antriebswelle nicht vor Montage im Motorgehäuse angebracht wird, d.h. der Antriebsmotor kann z.B. erst nach der Montage an die Pumpe auf seine Funktion geprüft werden.

Die mit der vorliegenden Erfindung zu lösende Aufgabe besteht darin, in einem aus einem Antriebsmotor und einer Pumpe bestehenden Aggregat, wobei die Motorantriebswelle ausschließlich im Pumpengehäuse gelagert ist, den Antriebsmotor mit einer Lagerung der Antriebswelle während des Transports und vor Zusammenbau von Motor- und Pumpengehäuse auszurüsten.

Diese Aufgabe wird durch die Merkmale des kennzeichnenden Teils des Anspruchs 1 gelöst, indem eine Lagerplatte pumpengehäuseseitig am Antriebsmotorgehäuse montiert wird, auf welcher die Antriebswelle ausschließlich vor der Montage ruht. Nach Verbindung von Antriebsmotor- und Pumpengehäuse besteht kein Kontakt zwischen Lagerplatte und Antriebswelle.

Eine weitere Aufgabe der Erfindung ist es, Maßnahmen hinsichtlich des Antriebsmotors und der Kolbenpumpe anzugeben, welche zu einer Verminderung der Geräusche des aus Antrieb und Pumpe bestehenden Aggregats führen.

Nach der Montage ist die Welle des Antriebsmotors somit ausschließlich und zumindest an einer Stelle im Pumpengehäuse selbst gelagert. Dabei wird die Lagerstelle möglichst nahe des Angriffsbereichs der Antriebswelle an die Pumpenkolben gelegt. Hierdurch wird der Übertragungsweg der von dem Angriffsbereich der Welle am Pumpenkolben ausgehenden Schallwellen durch die Dämpfungswirkung des Lagers verringert und gleichzeitig die Belastung der Welle über ihre Länge verringert, da die Kräfte der Pumpenkolben in unmittelbarer Nähe ihres Angriffsbereiches von dem Lager und damit dem Pumpengehäuse aufgenommen werden.

Eine besonders einfache Ausgestaltung ergibt sich für die erfindungsgemäße Lösung durch Anwendung der Merkmalskombination nach Anspruch 2, da hierdurch das Wellenende des Antriebsmotors relativ leicht in das Lager des Pumpengehäuses eingeführt werden kann.

Die Kraftaufnahme der Kolbenkräfte auf das Pumpengehäuse geschieht besonders wirksam durch Anwendung der Merkmale nach Anspruch 3. Hierbei werden gemaß Anspruch 4 vorzugsweise Wälzlager angewendet.

Es ist vorgesehen, die Antriebswelle ausschließlich im Pumpengehäuse zu lagern. Das bedeutet, daß in dem Gehäuse des Antriebsmotors keine Lagerung der Antriebswelle erfolgt, so daß keine Kontaktstellen zwischen Antriebswelle und diesem Gehäuse besteht, über die Schwingungen übertragen werden könnten. Eine derartige Lagerung wird auch als im Motorgehäuse freifliegend bezeichnet.

Um die durch die Aufnahme der Kolbenkräfte im Pumpengehäuse erreichte Dämpfung der Pumpengeräusche noch zu erhöhen, empfiehlt sich in Weiterbildung der Erfindung die Merkmalskombination nach Anspruch 5. Hierbei werden die von der Welle aufgenommenen Kräfte über die Lager im Pumpengehäuse und von dort über eine Dämpfungsschicht an das Pumpengehäuse weitergereicht. Die Dämpfungsschicht dient einerseits zur Verminderung der Kraftgradienten, d.h. die Änderung der in den Lagern wirksamen Kraft je Zeiteinheit, indem die Lager elastisch im Pumpengehäuse gehalten sind. Die Dämpfungsschicht bietet aber auch gleichzeitig eine Sperre für die Übertragung des Schalls von den Lagern in das Pumpengehäuse.

Eine geeignete Befestigungsmöglichkeit für die Dämpfungsschicht ist in Anspruch 6 aufgeführt. Danach ist vorgesehen, daß die Dämpfungsschicht auf der äußeren Lagerschale des oder der Wälzlager aufgeklebt oder aufvulkanisiert ist.

Eine große Herabsetzung der Schallübertragung von der Pumpe in das Motorgehäuse ergibt sich aus der Anordnung der Lagerplatte am Pumpengehäuse. Hierdurch werden alle Lagerkräfte, die vor der Montage auftreten, von dem Pumpengehäuse selbst aufgenommen. Die Lagerungsplatte zur Halterung der Antriebswelle dient im wesentlichen nur zu Transportzwecken, so daß im Betrieb im Motorgehäuse kein Lager zur Aufnahme der auf die Welle ausgeübten Kräfte vorgesehen ist.

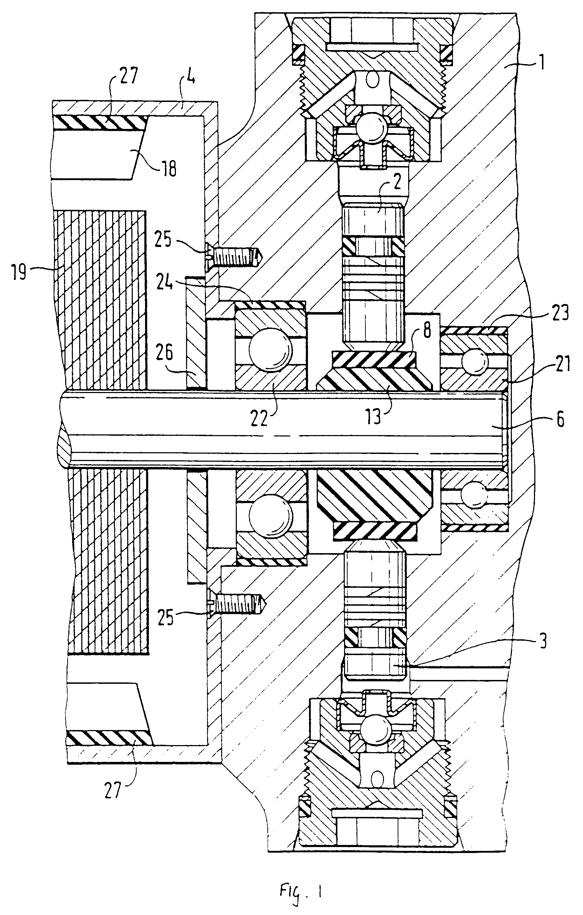

Ein Ausführungsbeispiel der Erfindung wird nachfolgend anhand der Zeichnung erläutert. Dabei wird zu den einzelnen Baugruppen nur insoweit Stellung genommen, als sie für die Erfindung wesentlich sind. Eine ausführliche Beschreibung der prinzipiellen Arbeitsweise der gezeigten Pumpe findet sich in der DE-OS 40 27 848.

In einem Pumpengehäuse 1 sind zwei Kolben 2,3 radial beweglich geführt. Zwischen die Kolben ragt eine Antriebswelle 6, auf der ein Exzenterteil 13 fixiert ist, welches mit der Antriebswelle 6 umläuft. Zwischen Exzenterteil 13 und dem Kolben 2,3 ist ein Lagerring 8 angeordnet, auf welchen der Boden der Kolben 2,3 aufsetzt. Anstatt des hier dargestellten Gleitlagers kann aber auch ein Wälzlager vorgesehen sein, welches zwischen Exzenterteil 13 und den Kolben 2 liegt.

Das Exzenterteil 13 besteht aus einem elastomeren Material, über welches die von der Antriebswelle 6 in Richtung zu den Kolben 2,3 wandernden Schallwellen bedämpft werden. Außerdem sorgt das isomere, elastische Material des Exzenterteils 13 für einen gewissen Ausgleich der schlagartig an der Welle auftretenden Kräfte. Die hier herrschenden Verhältnisse sind in der gleichzeitig mit der prioritätsbegründenden Patentanmeldung eingereichten DE 42 41 825 ausführlich erläutert.

Die Welle 6 ist mit einem gesonderten Exzenterteil 13 versehen, welches durch eine Haftverbindung, wie Kleben, Schweißen oder Vulkanisieren, mit der Welle 6 verbunden ist. Das Exzenterteil 13 besteht aus einem elastomeren Dämpfungsmaterial, wie Kunststoff oder Gummi, und ist von einem Lagerring 8 umgeben, auf dem die Kolben 2,3 sitzen. Im Ausführungsbeispiel gleiten die Kolben 2,3 auf dem Lagerring 8, während sich die Welle 6 des Antriebsmotors dreht. Es können statt der Gleitlagerung aber auch Wälzlager, insbesondere Nadellager, verwendet werden. Auch kann im Rahmen der Erfindung statt des durchgehend aus elastomerem Material bestehenden Exzenterteils dieses aus ringförmigen Schichten gebildet sein, die sich abwechselnd aus Eisen bzw. Stahl und Kunststoff zusammensetzen. Hierdurch erhält man eine oder mehrere Geräuschsperren und gleichzeitig eine erhöhte Festigkeit des Exzenterteils 13.

Die Welle 6 ragt ausgehend vom Gehäuse 4 des Antriebsmotors, wo sie über Magnete 18 und einen Anker 19 angetrieben wird in das Pumpengehäuse 1. Die Antriebswelle 6 ist über ein inneres Wälzlager 21 und ein äußeres Wälzlager 22 in dem Pumpengehäuse 1 gelagert. Statt der Wälzlager 21,22 können jeweils aber auch geeignete Gleitlager allein oder gemeinsam Verwendung finden. Für die Erfindung besonders wichtig ist eine ringförmige Dämpfungsschicht 23 bzw. 24, die jeweils zwischen der äußeren Fläche der äußeren Lagerschale der Lager 21 bzw. 22 und der entsprechenden Bohrung im Gehäuse 1 sitzt, welche die Lager 21,22 aufnimmt.

Das Motorgehäuse 4 ist über angedeutete Schrauben 25 mit dem Pumpengehäuse verschraubt. Weiterhin ist an der Stirnseite des Motorgehäuses 4 eine Lagerungsplatte 26 befestigt, die in gewissem Umfang Kräfte aufzunehmen vermag, die auf die Antriebswelle 6 wirken. Dabei ist die Lagerungsplatte 26 mit Spiel zur Antriebswelle 6 ausgebildet und dient zur Lagerung der Antriebswelle 6 solange das Gehäuse 4 des Antriebsmotors noch nicht an das Pumpengehäuse 1 montiert ist. Mit der Montage tritt eine Zentrierung der Antriebeswelle 6 bezüglich der Lagerungsplatte 26 ein, wodurch kein Kontakt zwischen dieser und der Antriebswelle 6 besteht.

Die Lagerungsplatte 26 zur Halterung der Antriebswelle 6 dient also im wesentlichen nur zu Transportzwecken, so daß im Betrieb im Motorgehäuse kein Lager zur Aufnahme der auf die Welle 6 ausgeübten Kräfte vorgesehen ist.

Für die Erfindung weiterhin maßgeblich ist die Dämpfungsschicht 27, über welche die Magnete 18 des Antriebsmotors an dessen Gehäuse 4 befestigt sind. Auch diese vorzugsweise ringförmige Dämpfungsschicht 27 dient wiederum zum Sperren von Körperschallwellen und zur Verringerung der über den Anker 19 auf die Magneten 18 ausgeübten Kräfte.

Auch die Verschraubung zwischen dem Gehäuse 4 des Antriebsmotors und dem Pumpengehäuse 1 kann unter Zwischenlegen einer Dämmschicht geschehen.

Die Erfindung betrifft also eine Radialkolbenpumpe mit Antriebsmotor für ein geregeltes Bremssystem.

## Patentansprüche

1. Aggregat aus Antriebsmotor und angetriebener Radialkolbenpumpe, insbesondere Hochdruckkolbenpumpe, bei der über eine mit einem Exzenterteil (13) versehene Antriebswelle (6) des Antriebsmotors zumindest ein Kolben (2,3) in einer Kolbenbohrung hin- und herbewegt wird, wobei das Gehäuse (1) der Pumpe mit dem Gehäuse (4) des Antriebsmotors durch eine vorzugsweise lösbare Verbindung (25) verbunden ist, wobei für die Antriebswelle (6) des Antriebsmotors mindestens ein Lager (21,22) vorgesehen ist, in dem die Antriebswelle (6) des Antriebsmotors seitlich gegenüber dem Angriffsbereich des Kolbens (2,3) bzw. der Kolben (2,3) an der Antriebswelle (6) im Pumpengehäuse (1) gelagert ist, wobei die Antriebswelle (6) ausschließlich im Pumpengehäuse (1) gelagert ist, dadurch **gekennzeichnet,** daß auf der dem Pumpengehäuse (1) zugewandten Seite des Gehäuses (4) des Antriebsmotors eine Lagerungsplatte (26) befestigt ist, die zur Lagerung der Antriebswelle (6) dient, bevor Antriebsmotor und Pumpengehäuse (1) montiert sind, und die nach der Montage mit Spiel zur Antriebswelle (6) ausgebildet ist.

2. Aggregat nach Anspruch 1, dadurch **gekennzeichnet,** daß das bzw. die Lager (21) am Ende der Antriebswelle (6) auf der dem Antriebsmotor abgewandten Seite unmittelbar neben dem Angriffsbereich des Kolbens (2,3) bzw. der Kolben (2,3) an der Antriebswelle (6) angreift bzw. angreifen.

3. Aggregat nach Anspruch 1 oder 2, dadurch **gekennzeichnet,** daß die Antriebswelle (6) über zwei zu beiden Seiten des Angriffsbereichs des Kolbens (2,3) bzw. der Kolben (2,3) an der Antriebswelle (6) angeordnete Lager (21,22) im Pumpengehäuse (1) gelagert ist.

4. Aggregat nach einem der Ansprüche 1 bis 3, dadurch **gekennzeichnet,** daß das oder die Lager (21,22) ein bzw. zwei Wälzlager ist bzw. sind.

5. Aggregat nach einem der vorangegangenen Ansprüche, dadurch **gekennzeichnet,** daß eine äußere Lagerschale zumindest eines Lagers (21,22) über eine Dämpfungsschicht (23,24) am Pumpengehäuse (1) abgestützt ist.

6. Aggregat zumindest nach Anspruch 4 und 5, dadurch **gekennzeichnet,** daß die Dämpfungsschicht (23,24) auf der äußeren Lagerschale des Wälzlagers oder der Wälzlager (21,22) aufgeklebt oder aufvulkanisiert ist.

7. Aggregat nach einem der vorhergehenden Ansprüche, dadurch **gekennzeichnet,** daß die Lagerungsplatte (26) senkrecht zu der Achse der Antriebswelle (6) stehend am Gehäuse (4) des Antriebsmotors befestigt ist.

8. Aggregat nach einem der vorangegangenen Ansprüche, dadurch **gekennzeichnet,** daß die Magnete (18) des Antriebsmotors über eine Dämpfungsschicht (27) am Gehäuse (4) des Antriebsmotors abgestützt sind.

9. Aggregat nach einem der vorangegangenen Ansprüche, dadurch **gekennzeichnet,** daß es zur Druckerzeugung in einem blockier- bzw. antriebsschlupfgeregelten hydraulischen Bremssystem eingesetzt ist.

## Claims

1. An assembly unit including a drive motor and a driven radial piston pump, in particular a high-pressure piston pump, wherein at least one piston (2, 3) is moved so as to reciprocate in a piston bore by means of a drive shaft (6) of the drive motor having an eccentric part (13), with the housing (1) of the pump being connected with the housing (4) of the drive motor by means of a preferably detachable type of connection (25), and the drive shaft (6) of the drive motor has at least one bearing (21, 22) in which the drive shaft (6) of the drive motor is supported in the pump housing (1), laterally relative to the range of impact of the piston(s) (2, 3) on the drive shaft (6), the drive shaft (6) being supported exclusively in the pump housing (1),
**characterized** in that, on the side of the housing (4) of the drive motor which faces the pump housing (1), a bearing plate (26) is fastened which serves to support the drive shaft (6) prior to the mounting of the drive motor and the pump housing (1), and which is provided with a play relative to the drive shaft (6) after the assembly.

2. An assembly unit as claimed in claim 1,
**characterized** in that the bearing(s) (21) act(s) on the end of the drive shaft (6) on the side remote from the drive motor in direct proximity to the range of impact of the piston(s) (2, 3) on the drive shaft (6).

3. An assembly unit as claimed in claim 1 or claim 2,
**characterized** in that the drive shaft (6) is supported in the pump housing (1) by way of two bearings (21, 22) arranged on either side of the range of impact of the piston(s) (2, 3) on the drive shaft (6).

4. An assembly unit as claimed in any one of claims 1 to 3,
**characterized** in that the bearing(s) (21, 22) is/are one or two antifriction bearing(s).

5. An assembly unit as claimed in any one of the preceding claims,
**characterized** in that an outer bearing bush of at least one bearing (21, 22) is supported on the pump housing (1) by way of a silencing layer (23, 24).

6. An assembly unit as claimed in claims 4 and 5,
**characterized** in that the silencing layer (23, 24) is glued or vulcanized onto the outer bearing bush of the antifriction bearing(s) (21, 22).

7. An assembly unit as claimed in any one of the preceding claims,
**characterized** in that the bearing plate (26) is fastened to the housing (4) of the drive motor so as to be perpendicular to the axis of the drive shaft (6).

8. An assembly unit as claimed in any one of the preceding claims,
**characterized** in that the magnets (18) of the drive motor are supported on the housing (4) of the drive motor by way of a silencing layer (27).

9. An assembly unit as claimed in any one of the preceding claims,
**characterized** in that it is used for the generation of pressure in a hydraulic brake system with anti-lock control or traction slip control.

## Revendications

1. Ensemble constitué d'un moteur d'entraînement et d'une pompe à pistons radiaux, notamment pompe à pistons à haute pression, qui est entraînée, dans lequel au moins un piston (2, 3) est déplacé dans un sens et dans l'autre dans un alésage de piston au moyen d'un arbre d'entraînement (6) du moteur d'entraînement qui est pourvu d'une pièce excentrique (13), tandis que le boîtier (1) de la pompe est relié au boîtier (4) du moteur d'entraînement au moyen d'une liaison (25) de préférence démontable et que, pour l'arbre d'entraînement (6) du moteur d'entraînement, il est prévu au moins un palier (21, 22) dans lequel l'arbre d'entraînement (6) du moteur d'entraînement est monté à palier dans le boîtier de pompe (1) sur le côté vis-à-vis de la zone d'attaque du piston (2, 3) ou des pistons (2, 3) sur l'arbre d'entraînement (6), de sorte que l'arbre d'entraînement (6) est monté à palier exclusivement dans le boîtier de pompe (1), caractérisé en ce qu'il est prévu, fixée sur la face du boîtier (4) du moteur d'entraînement qui est tournée vers le boîtier de pompe (1), une plaque de soutien (26) qui sert à soutenir l'arbre d'entraînement (6) avant que le moteur d'entraînement et le boîtier de pompe (1) soient assemblés et qui est réalisée de façon à présenter un certain jeu vis-à-vis de l'arbre d'entraînement (6) après l'assemblage.

2. Ensemble selon la revendication 1, caractérisé en ce que le ou les paliers (21), disposés à l'extrémité de l'arbre d'entraînement (6) du côté situé à l'opposé du moteur d'entraînement, attaque ou attaquent directement à côté de la zone d'attaque du piston (2, 3) ou des pistons (2, 3) sur l'arbre d'entraînement (6).

3. Ensemble selon la revendication 1 ou 2, caractérisé en ce que l'arbre d'entraînement (6) est monté à palier dans le boîtier de pompe (1) par l'intermédiaire de deux paliers (21, 22) disposés des deux côtés de la zone d'attaque du piston (2, 3) ou des pistons (2, 3) sur l'arbre d'entraînement (6).

4. Ensemble selon l'une des revendications 1 à 3, caractérisé en ce que le ou les paliers (21, 22) est ou sont constitués de respectivement un ou deux roulements.

5. Ensemble selon l'une des revendications précédentes, caractérisé en ce qu'une bague extérieure d'au moins un palier (21, 22) prend appui sur le boîtier de pompe (1) par l'intermédiaire d'une couche d'amortissement (23, 24).

6. Ensemble au moins selon les revendications 4 et 5, caractérisé en ce que la couche d'amortissement (23, 24) est appliquée sur la bague extérieure du roulement ou des roulements (21, 22) par collage ou par vulcanisation.

7. Ensemble selon l'une des revendications précédentes, caractérisé en ce que la plaque de soutien (26) est fixée sur le boîtier (4) du moteur d'entraînement de façon à se dresser perpendiculairement à l'axe de l'arbre d'entraînement (6).

8. Ensemble selon l'une des revendications précédentes, caractérisé en ce que les aimants (18) du moteur d'entraînement sont appliqués sur le boîtier (4) du moteur d'entraînement par l'intermédiaire d'une couche d'amortissement (27).

9. Ensemble selon l'une des revendications précédentes, caractérisé en ce qu'il est monté, en vue de produire une pression, dans un système de freinage hydraulique à régulation antiblocage ou régulation du glissement de traction.
